# EUROPÄISCHE PATENTSCHRIFT

(11) **EP 4 226 069 B1**
(45) Veröffentlichungstag und Bekanntmachung des Hinweises auf die Patenterteilung: **10.09.2025**
(21) Anmeldenummer: 21783263.3
(22) Anmeldetag: 27.09.2021
(51) Int. Cl.: F16L 41/03, F16L 37/14, F16L 55/11, B01D 35/00, B01D 65/00, B01D 35/30

(54) **VERTEILERBAUGRUPPE FÜR EINE SEPARATIONSEINHEIT EINER MODULAREN PROZESS-VORRICHTUNGSANORDNUNG**
DISTRIBUTOR ASSEMBLY FOR A SEPARATION UNIT OF A MODULAR PROCESS DEVICE ASSEMBLY
MODULE DE DISTRIBUTION POUR UNE UNITÉ DE SÉPARATION D'UN AGENCEMENT DE DISPOSITIF DE PROCESSUS MODULAIRE

(30) Priorität: 08.10.2020 EP 20200822
(43) Veröffentlichungstag der Anmeldung: 16.08.2023
(73) Patentinhaber: Sartorius Stedim Biotech GmbH, 37079 Göttingen (DE)
(72) Erfinder: HANDT, Sebastian, 37079 Göttingen (DE); MIETH, Florian, 37079 Göttingen (DE); HEISE, Heino, 37079 Göttingen (DE)
(74) Vertreter: Novagraaf International SA
(86) Internationale Anmeldenummer: PCT/EP2021/076504
(87) Internationale Veröffentlichungsnummer: WO 2022/073788

(56) Entgegenhaltungen:
- EP-A2- 0 715 112
- EP-A2- 1 898 139
- WO-A1-2014/014765
- WO-A1-2019/066793
- DE-A1- 1 775 715
- DE-A1- 102010 009 816

## Beschreibung

Die Erfindung betrifft eine Verteilerbaugruppe für eine Separationseinheit einer modularen Prozess-Vorrichtungsanordnung, die für die Durchführung einer oder mehrerer Grundoperationen in einem bioverfahrenstechnischen Prozess vorgesehen ist.

Im Bereich der Aufreinigung (Downstream-Prozess) werden Separationseinheiten wie etwa Filtercapsulen, Chromatographiesäulen oder Membranadsorber eingesetzt. Derzeit werden solche Separationseinheiten und ggf. weitere Funktionseinheiten (Sensoren, Pumpen, Mischer etc.) mithilfe von Schläuchen und/ oder Verrohrungen untereinander fest verschaltet, um einen bestimmten Prozessschritt durchführen zu können.

Eine solche herkömmliche Prozessanordnung benötigt viel Platz und ist sehr unhandlich, auch weil viele Komponenten der Anordnung fixiert werden müssen. Außerdem weist eine solche Anordnung große Toträume auf, was zum einen die Gefahr einer unerwünschten Rückvermischung birgt und zum anderen einer gewünschten maximalen Produktausbeute entgegensteht. Dies ist insbesondere bei der Herstellung von hochwertigen biopharmazeutischen Wirkstoffen von Bedeutung. Ein weiterer Nachteil einer herkömmlichen Prozessanordnung ist, dass vor der Durchführung weiterer Separationsschritte im Downstream-Prozess das aufzureinigende Medium jeweils umständlich zwischengelagert werden muss, z. B. in einem separaten Tank oder in Beuteln, da es aktuell an der Kompatibilität der Schnittstellen dieser Zwischenschritte mangelt (druckanfällig, keine Sterilbarriere, keine passenden Anschlüsse, etc.).

Viele dieser Nachteile sind durch die ausladenden und unflexiblen, d. h. nicht ohne Weiteres veränderbaren oder einstellbaren Fluidverbindungen der Separationseinheiten bedingt. Außerdem sind zur Sicherung solcher Fluidverbindungen oft besondere Maßnahmen erforderlich, was den Aufwand beim Aufbau einer Prozess- Vorrichtungsanordnung und deren Handhabung zusätzlich erschwert.

Es sind spezielle Kupplungsvorrichtungen zur Herstellung und Trennung von Fluidverbindungen bekannt, bei denen ein Sicherungselement zum Einsatz kommt, beispielsweise aus EP 462 971 B1, EP 1 644 656 B1, EP 1 651 901 B1, WO 2016/057794 A1 und US 6 231 089 B1. In der US 7 981 289 B2 ist eine modular aufgebaute Fluidbehandlungsvorrichtung mit einzelnen Modulen gezeigt, deren Kopfabschnitte Fluidleitungen und zugehörige Fluidanschlüsse (Ports) aufweisen. Die Fluidanschlüsse benachbarter Module können über Konnektoren miteinander verbunden sein.

DE 1 775 715 A1 zeigt eine Verteilerbaugruppe mit den Merkmalen des Oberbegriffs des Anspruchs 1. Ein Verteilerblock hat mehrere Außenflächen mit Bohrungen, die von den entsprechenden Flächen ausgehend in den Block hineinragen und unter Ausbildung eines Raumes innerhalb des Blocks miteinander in Verbindung stehen. In dem Raum ist ein Kugelventilelement aufgenommen. In den einzelnen Bohrungen sind Verbindungsstücke mit Rillen angeordnet, An den Bohrungen sind Schlitze im Block ausgebildet, in die Klammern oder Bügel eingeführt werden können, sodass deren Schenkel in den Rillen der Verbindungsstücke aufgenommen werden.

EP 1 898 139 A2 betrifft einen Fluidverteiler mit mindestens zwei Verteilerelementen, die jeweils einen rohrförmigen Kanal mit einem männlichen und einem komplementären weiblichen Ende umfassen, wobei das männliche Ende eines der Elemente axial in das weibliche Ende des anderen Elements eingreift. Außerdem weist jedes Verteilerelement mindestens ein seitliches Verbindungsstück auf, das eine Verbindung mit dem Kanal herstellt. In einem freien weiblichen Ende eines Verteilerelements kann ein Stopfen aufgenommen sein, der ein Sperrventil aufweist. Ein U-förmiges axiales Blockierelement wird über einen radialen Schlitz im weiblichen Ende eines Verteilerelements in eine zugehörige ringförmige Nut im männlichen Ende eingeführt, um das männliche Ende im weiblichen Teil zu fixieren.

In der EP 0 715 112 A2 ist eine Einrichtung zum Zusammenschalten mehrerer Elektromagnetventile in Serien- und/oder Parallelschaltung gezeigt. Ein Verteilerstück der Einrichtung ist aus mehreren T-Stücken mit einem steckerartigen Verbindungsteil und einem buchsenartigen Verbindungsteil zusammengesetzt. An der Innenseite des buchsenartigen Verbindungsteils sind in Umfangsrichtung voneinander beabstandete Führungsrippen und Rastelemente angeordnet. Ein mit ähnlichen Rippen versehenes steckerartiges Verbindungsteil kann in unterschiedlichen Winkelstellungen in ein buchsenartiges Verbindungsteil eingesteckt werden, wobei die Rippen ineinander eingreifen und ein Verdrehen verhindern. Nach dem Zusammenstecken wird auf die äußere Mantelfläche des buchsenartigen Verbindungsteils eine Kunststoff-Klammer mit Verriegelungselementen aufgesteckt, die durch Schlitze im buchsenartigen Verbindungsteil hindurchgreifen und in eine Umfangsnut am steckerartigen Verbindungsteil eingreifen.

Aufgabe der Erfindung ist es, die Fluidverbindungen von Separationseinheiten und anderen Funktionseinheiten innerhalb einer Prozess-Vorrichtungsanordnung zu verbessern und zu vereinfachen.

Gelöst wird diese Aufgabe durch eine Verteilerbaugruppe mit den Merkmalen des Anspruchs 1. Vorteilhafte und zweckmäßige Ausgestaltungen der erfindungsgemäßen Verteilerbaugruppe sind in den Unteransprüchen angegeben.

Die erfindungsgemäße Verteilerbaugruppe ist für eine Separationseinheit einer modularen Prozess-Vorrichtungsanordnung vorgesehen und umfasst ein Gehäuse und einer sich im Inneren des Gehäuses befindlichen Fluidverteilereinrichtung mit mehreren Fluidanschlüssen, die einen einem durch eine offene Gehäuseseite zugänglichen, mittigen Arbeitsanschluss und mehrere seitliche Zuführ- oder Abführanschlüsse umfassen, wobei den Zuführ- oder Abführanschlüssen (30) jeweils eine Öffnung am Gehäuse zugeordnet ist, wobei die Fluidverteilereinrichtung Strömungsverbindungen zwischen den Fluidanschlüssen selektiv herstellen und sperren kann. Die Verteilerbaugruppe umfasst ferner ein Anschlusselement, welches an einen der Zuführ- oder Abführanschlüsse über die diesem Zuführ- oder Abführanschluss zugeordnete Öffnung anbringbar ist und ein Sicherungselement. Die Verteilerbaugruppe weist an dem Zuführ- oder Abführanschluss, an dem das Anschlusselement anbringbar ist, einen zugeordneten Montageschacht auf. Der Montageschacht ist so an die Form des Sicherungselements angepasst, dass das Sicherungselement bis zu einer definierten Sicherungsposition in den Montageschacht einführbar ist, in der das Sicherungselement am Anschlusselement angreift und dieses fixiert. Das Anschlusselement weist eine Verdrehsicherung auf, die sicherstellt, dass das Anschlusselement nur in einer einzigen Orientierung oder nur in einer begrenzten Anzahl definierter Orientierungen in die dem Zuführ- oder Abführanschluss, an dem das Anschlusselement anbringbar ist, zugeordnete Öffnung der Verteilerbaugruppe eingesetzt und mittels des Sicherungselements fixiert werden kann.

Die Erfindung beruht auf der Erkenntnis, dass mithilfe von geeigneten Verteilerbaugruppen mit standardisierten Anschlussmöglichkeiten ein einfacher, modularer Aufbau einer Prozess-Vorrichtungsanordnung erreicht werden kann. Hierzu weist die erfindungsgemäße Verteilerbaugruppe neben einer Fluidverteilereinrichtung, die eine flexible Verschaltung von Separationseinheiten und anderen Funktionseinheiten ermöglicht, eine besondere Verbindungstechnik auf, mit der sowohl eine Strömungsverbindung als auch eine starre mechanische Verbindung zu einer benachbarten Verteilerbaugruppe oder einer Funktionseinheit hergestellt werden kann.

Die erfindungsgemäße Verteilerbaugruppe zeichnet sich dadurch aus, dass die zur Verbindung benötigten Einrichtungen, insbesondere das Sicherungselement, der Montageschacht und der auf das Sicherungselement abgestimmte Abschnitt des jeweiligen Anschlusselements einfach zu fertigen sind. Der Aufwand für die Montage dieser Teile zur Herstellung einer sicheren, stabilen Verbindung ist äußerst gering.

Im Sinne der vorliegenden Erfindung umfasst der Begriff "Anschlusselement" alle Komponenten, die direkt an einen der Zuführ- oder Abführanschlüsse der Verteilerbaugruppe angeschlossen und mithilfe des in den Montageschacht einführbaren Sicherungselements fixiert werden können.

Insbesondere kann das Anschlusselement ein Konnektor sein. Ein solcher Konnektor weist einen durch eine Wandung begrenzten Strömungskanal auf, der in zwei entgegengesetzte offene Enden mündet. Im fixierten Zustand des Konnektors fluchtet ein offenes Ende des Konnektors mit dem Zuführ- oder Abführanschluss der Verteilerbaugruppe. Mithilfe des Sicherungselements wird der Konnektor an diesem Ende fixiert. Das andere Ende des Konnektors kann auf die gleiche Weise an einer benachbarten Verteilerbaugruppe fixiert werden, sodass neben einer starren mechanischen Verbindung auch eine kurze, sichere Strömungsverbindung hergestellt ist. Besonders hervorzuheben ist in diesem Zusammenhang, dass die Wandung des Konnektors sehr druckstabil ausgelegt werden kann. Um einen vergleichbaren Sicherheitsstandard bei einer herkömmlichen Schlauchverbindung zu erreichen, wären aufwendige zusätzliche Maßnahmen erforderlich.

Als Anschlusselement kann neben einem Konnektor auch eine Funktionseinheit vorgesehen sein, die im fixierten Zustand in Strömungsverbindung mit dem Zuführ- oder Abführanschluss steht. Unter einer solchen Funktionseinheit soll hier kein Konnektor, keine weitere Verteilerbaugruppe und auch keine Separationseinheit verstanden werden. Vielmehr ist damit eine andere Funktionseinheit gemeint, die einem anderen Zweck im Rahmen der Prozessdurchführung bzw. -steuerung dient. Eine solche Funktionseinheit kann z. B. eine Entlüftungseinrichtung, eine Probeentnahmeeinrichtung, ein Sensor (insbesondere zur Messung von Druck, Fluss, Viskosität, pH-Wert oder elektrische Leitfähigkeit) oder eine spektroskopische Messeinrichtungen (UV-VIS, NIR, Raman etc.) sein. Das bedeutet, dass dank der Erfindung solche Funktionseinheiten direkt an einen Zuführ- oder Abführanschluss einer Verteilerbaugruppe angeschlossen werden und somit als Komponente der Verteilerbaugruppe betrachtet werden können.

Gemäß einer Weiterbildung der Erfindung kann eine solche Funktionseinheit auch in einen Blindstopfen integriert sein.

Ein an einem der Zuführ- oder Abführanschlüsse angebrachtes Anschlusselement kann auch ein Septum aufweisen, um zu einem bestimmten Zeitpunkt einen Zugang für eine Kanüle zu schaffen. Über diesen Zugang kann Flüssigkeit z. B. mit einer Spritze entnommen (etwa zur Probennahme) oder zugeführt werden. Das Septum kann auch in einen Blindstopfen integriert sein.

Unabhängig von der sonstigen Ausgestaltung des Anschlusselements sollte(n) dasjenige bzw. diejenigen Ende(n), das bzw. die mit dem Zuführ- oder Abführanschluss der Verteilerbaugruppe verbunden werden soll(en), universal ausgebildet sein, d. h. diese Enden sollten gleichermaßen so gestaltet sein, dass jedes von ihnen mit dem Sicherungselement fixiert werden kann. Gemäß einer bevorzugten Gestaltung ist vorgesehen, dass im fixierten Zustand des Anschlusselements das Sicherungselement mit einem Eingriffsabschnitt in eine Aussparung des Anschlusselements eingreift. Diese Aussparung sollte dementsprechend bei allen Anschlusselementen im Wesentlichen gleich sein.

In manchen Fällen ist es gewünscht oder für eine ordnungsgemäße Funktionsweise notwendig, dass eine Funktionseinheit nach der Montage gegen ein Verdrehen gesichert ist. So ist etwa bei einer Entlüftungseinrichtung sicherzustellen, dass die Luft nach oben entweichen kann.

Dies lässt sich gemäß einer ersten Variante dadurch erreichen, dass der Eingriffsabschnitt des Sicherungselements und die Aussparung des Anschlusselements so aufeinander abgestimmt sind, dass das Anschlusselement nur in einer einzigen Orientierung oder nur in einer begrenzten Anzahl definierter Orientierungen durch das Sicherungselement fixierbar ist. Beispielsweise sorgt eine quadratische Grundform des Eingriffsabschnitts und der Aussparung dafür, dass das Anschlusselement in nur in einer von vier möglichen Orientierungen fixiert und danach nicht mehr verdreht werden kann. Eine dreieckige Grundform erlaubt drei Orientierungen usw.

Eine oder mehrere Vorzugsorientierungen des Anschlusselements lassen sich gemäß einer zweiten Variante auch dadurch erreichen, dass ein Flansch des Anschlusselements und eine dem Zuführ- oder Abführanschluss zugeordnete Öffnung so aufeinander abgestimmt sind, dass das Anschlusselement nur in einer einzigen Orientierung oder nur in einer begrenzten Anzahl definierter Orientierungen in diese Öffnung einsetzbar ist.

Damit das Sicherungselement, mit dem das Anschlusselement fixiert wird, nicht aus dem Montageschacht herausfallen kann, ist bei einer bevorzugten Ausführungsform vorgesehen, dass das Sicherungselement ein Rastelement aufweist, das in der Sicherungsposition des Sicherungselements mit einem darauf abgestimmten Rastabschnitt im oder am Montageschacht der Verteilerbaugruppe zusammenwirkt. Vorzugsweise ist das Rastelement und/oder der Rastabschnitt elastisch auslenkbar. Grundsätzlich lässt sich dieses Prinzip auch umkehren, d. h. das Rastelement kann im bzw. am Montageschacht und der Rastabschnitt am Sicherungselement vorgesehen sein.

Diese Art der Sicherung kann in zwei funktional unterschiedlichen Ausführungsvarianten bereitgestellt werden. Um nach dem Anschließen eines Anschlusselements eine nachträgliche Manipulation nicht zuzulassen oder erkennbar zu machen, ist gemäß der ersten Ausführungsvariante vorgesehen, dass das Rastelement in der Sicherungsposition des Sicherungselements nicht mehr vom Rastabschnitt lösbar ist. Ein Entfernen des Anschlusselements ist dann nur durch eine gewaltsame Beschädigung des Sicherungselements oder des Gehäuses der Verteilerbaugruppe möglich. Eine solche unlösbare Fixierung empfiehlt sich für einen vorgegebenen und bereits vormontierten Aufbau, um Fehler auf Seiten des Anwenders auszuschließen.

Falls dem Anwender jedoch gestattet werden soll, ein bereits montiertes Anschlusselement wieder zu entfernen, ist gemäß der zweiten Ausführungsvariante vorgesehen, dass das Rastelement und der Rastabschnitt so aufeinander abgestimmt sind, dass das Sicherungselement durch ein Auslenken des Rastelements oder des Rastabschnitts aus der Sicherungsposition entfernbar ist, ggf. mithilfe eines Werkzeugs. Eine solche lösbare Fixierung ist für Anwender gedacht, die z. B. eigene Testaufbauten realisieren wollen.

Um in jedem Fall Fehler bei der Einführung des Sicherungselements zu vermeiden, weisen bei einer bevorzugten Ausführungsform das Sicherungselement und die Verteilerbaugruppe, insbesondere der Montageschacht, komplementäre Indexstrukturen auf, die so miteinander zusammenwirken, dass ein Einführen des Sicherungselements in einer falschen Orientierung in den Montageschacht unterbunden ist. Diese Sicherheitsmaßnahme ist z. B. dann sinnvoll, wenn das Sicherungselement auf einer Seite ein Rastelement aufweist, das bei einer falschen Orientierung des Sicherungselements im Montageschacht nicht in die Sicherungsposition einschnappen könnte.

Die komplementären Indexstrukturen können wenigstens eine Erhebung, beispielsweise eine oder mehrere Schienen, und wenigstens eine an die Erhebung angepasste Vertiefung aufweisen. Dadurch lässt sich auf einfache Weise eine mechanische Codierung nach dem Poka-Yoke-Prinzip schaffen.

Im Hinblick auf eine effektive Sicherung gegen Leckage ist das Anschlusselement vorzugsweise durch wenigstens zwei Dichtringe gegenüber dem Zuführ- oder Abführanschluss, an dem das Anschlusselement anbringbar ist, abgedichtet.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Prozess-Vorrichtungsanordnung für die Durchführung einer oder mehrerer Grundoperationen in einem bioverfahrenstechnischen Prozess mit mehreren Separationseinheiten und Verteilerbaugruppen;
- Figur 2 eine andere Ansicht der Prozess-Vorrichtungsanordnung aus Figur 1;
- Figur 3 eine Explosionsansicht einer erfindungsgemäßen Verteilerbaugruppe ohne Anschlusselemente;
- Figur 4 eine teilweise geschnittene Ansicht der Verteilerbaugruppe aus Figur 3 mit eingesetzten Anschlusselementen;
- Figur 5 einen Konnektor gemäß einer ersten Ausführungsform;
- Figur 6 ein Sicherungselement;
- Figur 7 eine Verteilerbaugruppe mit eingesetzten Sicherungselementen ohne Konnektoren;
- Figur 8 einen Montageschacht einer Verteilerbaugruppe;
- Figur 9 eine geschnittene Vorderansicht des Montageschachts mit teilweise eingesetztem Sicherungselement;
- Figur 10 eine geschnittene Seitenansicht des Montageschachts mit vollständig eingesetztem Sicherungselement;
- Figur 11a eine symbolische Darstellung eines unlösbar eingesetzten Sicherungselements;
- Figur 11b eine symbolische Darstellung eines lösbar eingesetzten Sicherungselements;
- Figur 12 eine Schlauchtülle;
- Figur 13 einen Konnektor gemäß einer zweiten Ausführungsform;
- Figur 14 einen Konnektor gemäß einer vierten Ausführungsform;
- Figur 15 einen Konnektor gemäß einer fünften Ausführungsform;
- Figur 16 einen Konnektor gemäß einer sechsten Ausführungsform; und
- Figur 17 einen Blindstopfen.

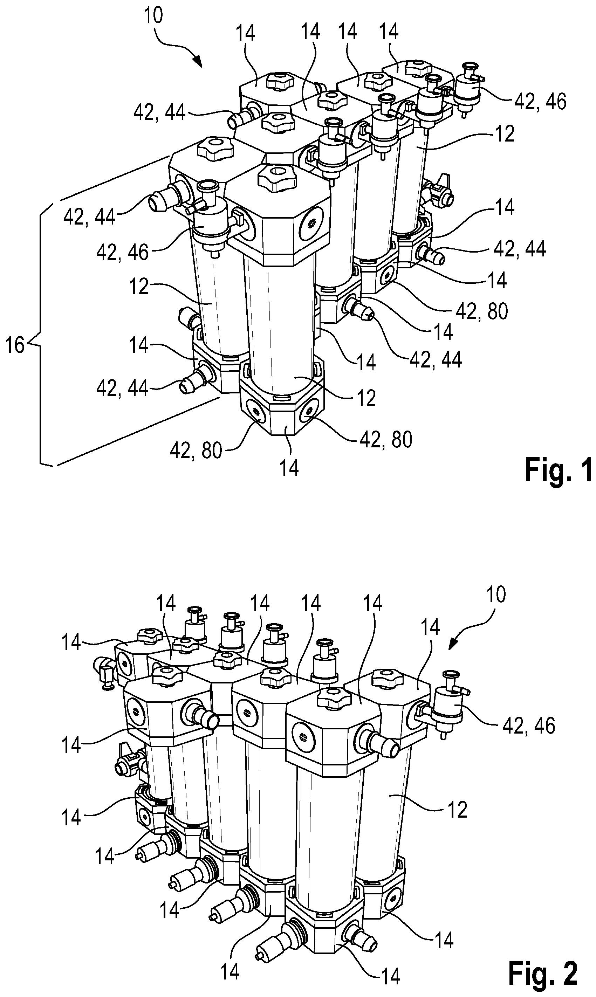

In den Figuren 1 und 2 ist beispielhaft eine Prozess-Vorrichtungsanordnung 10 für die Durchführung einer oder mehrerer Grundoperationen in einem bioverfahrenstechnischen Prozess dargestellt. Die Prozess-Vorrichtungsanordnung 10 umfasst mehrere Separationseinheiten 12, die sich hinsichtlich Separationstechnik (z. B. Filtercapsule, Chromatographiesäule, Membranadsorber) und/oder Filtermaterial und/oder Bauart und/oder Baugröße und/oder anderer Parameter unterscheiden können.

Die Separationseinheiten 12 sind untereinander mithilfe spezieller Verteilerbaugruppen 14, die insbesondere in dem beispielhaft in den Figuren 1 und 2 gezeigten Anwendungsfall auch als Verteilerkappen bezeichnet werden können, verschaltet. Die Prozess-Vorrichtungsanordnung 10 umfasst somit mehrere Untereinheiten (Module) 16, die aus einer Separationseinheit 12 und einer oder zwei Verteilerbaugruppen 14 gebildet sind, welche an einer oder beiden Stirnseiten der Separationseinheiten 12 angebracht sind. Die Verteilerbaugruppen 14 sind jeweils mit wenigstens einer benachbarten Verteilerbaugruppe 14 fest verbunden, sodass ein starrer Verbund von Verteilerbaugruppen 14 gebildet ist.

Im dargestellten Ausführungsbeispiel weisen alle Verteilerbaugruppen 14 den gleichen grundlegenden Aufbau auf, und jede Verteilerbaugruppe 14 ist einer Separationseinheit 12 zugeordnet und an dieser fest angebracht, sodass sich insgesamt eine kompakte und stabile Prozess-Vorrichtungsanordnung 10 mit definiert - insbesondere in einem Raster - angeordneten Separationseinheiten 12 ergibt.

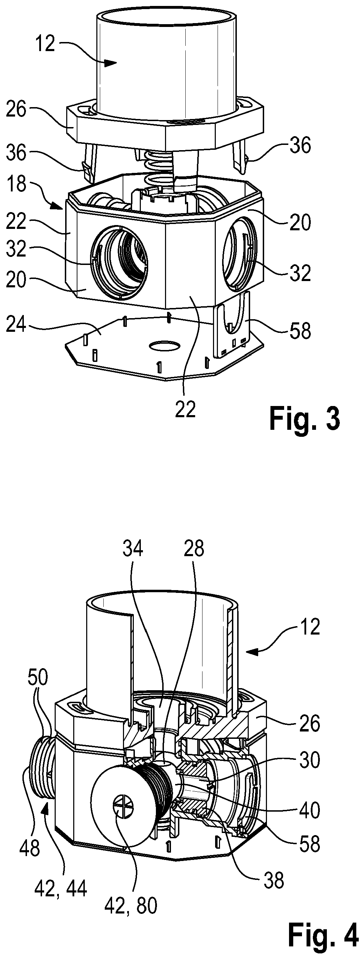

Aus den Figuren 3 und 4 geht der grundlegende Aufbau der Verteilerbaugruppen 14 hervor. Die Verteilerbaugruppe 14 weist ein Gehäuse 18 auf, das im Wesentlichen die Form eines geraden Prismas hat, dessen Grund- und Deckfläche wiederum im Wesentlichen die Form eines gleichwinkligen Polygons, hier eines Oktagons, hat. Vier rechtwinklig zueinander ausgerichtete Haupt-Seitenwände 20 sind durch dazwischenliegende Neben-Seitenwände 22 miteinander verbunden. Auf der einen Stirnseite ist das Gehäuse 18 durch einen Deckel 24 geschlossen, auf der anderen Stirnseite ist das Gehäuse 18 offen und wird durch einen Boden- oder Deckelabschnitt 26 (je nachdem, ob die Verteilerbaugruppe 14 bezogen auf die Betriebsstellung der Separationseinheit 12 unten oder oben auf die Separationseinheit 12 aufgesetzt wird) der zugeordneten Separationseinheit 12, die in den Figuren 3 und 4 nicht vollständig dargestellt ist, abgedeckt.

Im Inneren des Gehäuses 18 befindet sich eine Fluidverteilereinrichtung mit einem durch die offene Gehäuseseite zugänglichen, mittigen Arbeitsanschluss 28 und mehreren seitlichen Zuführ- oder Abführanschlüssen 30. Die Zuführ- oder Abführanschlüsse 30 der Fluidverteilereinrichtung liegen in einer Ebene, die senkrecht zur axialen Richtung des Arbeitsanschlusses 28 orientiert ist. Bei der hier gezeigten Fluidverteilereinrichtung sind vier Zuführ- oder Abführanschlüsse 30 vorgesehen, die in Winkelabständen von 90° angeordnet sind und durch entsprechende Öffnungen 32 in den Haupt-Seitenwänden 20 des Gehäuses 18 zugänglich sind.

Die Verteilerbaugruppe 14 umfasst des Weiteren Anschlussmittel, mit denen beim Aufsetzen der Verteilerbaugruppe 14 auf den Boden- oder Deckelabschnitt 26 der Separationseinheit 12 eine Strömungsverbindung zwischen einem Fluideinlass oder -auslass 34 der Separationseinheit 12 und dem Arbeitsanschluss 28 der Fluidverteilereinrichtung hergestellt wird. Mithilfe von Montagemitteln 36 (Rastelemente o.ä.) wird die Verteilerbaugruppe 14 am Boden- oder Deckelabschnitt 26 der Separationseinheit 12 fixiert. Die Boden- oder Deckelabschnitte 26 aller Separationseinheiten 12 sind auf die standardisiert angeordneten und gestalteten Anschlussmittel und Montagemittel 36 der Verteilerbaugruppe 14 abgestimmt.

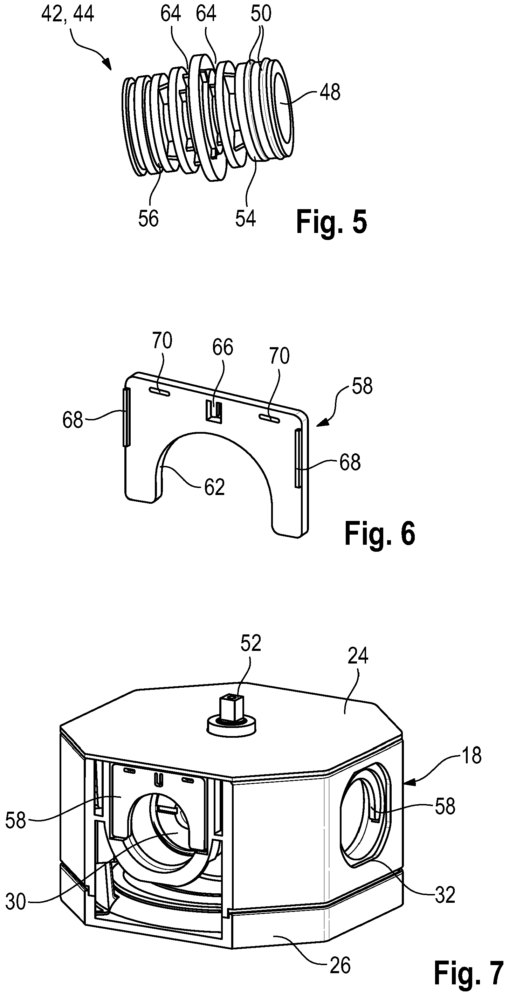

Die Fluidverteilereinrichtung ist bei dieser Ausführungsform im Wesentlichen durch ein Mehrwegeventil gebildet, genauer gesagt durch ein Kugelventil, das die genannten Fluidanschlüsse bereitstellt und verschiedene Schaltstellungen einnehmen kann. Eine wesentliche Komponente dieses Ventils ist eine auf jeder Zuführ- oder Abführanschlussseite mit einem Dichtring abgedichtete und durch ein Stützelement 38 in Position gehaltene Kugel 40 mit Bohrungen. Die Kugel 40 kann über eine Spindel 52 (siehe Figur 7) oder dergleichen in wenigstens zwei verschiedene Schaltstellungen gedreht werden.

An einen oder mehrere der Zuführ- oder Abführanschlüsse 30 der Fluidverteilereinrichtung einer Verteilerbaugruppe 14 können bestimmte Anschlusselemente 42 angebracht werden. Solche Anschlusselemente 42 können Konnektoren 44 sein, die eine Strömungsverbindung zu einer benachbarten Verteilerbaugruppe 14 oder zu anderen Komponenten, etwa einer Schlauchleitung, herstellten. Anschlusselemente 42 können aber auch bestimmte Funktionseinheiten sein. Unter solchen Funktionseinheiten sind hier keine weiteren Verteilerbaugruppen 14 und auch keine Separationseinheiten 12 zu verstehen, sondern spezielle Komponenten, die eine zusätzliche Funktionalität bereitstellen oder ermöglichen, wie etwa die in den Figuren 1 und 2 gezeigten Entlüftungseinrichtungen 46.

Nachfolgend wird zunächst das Verbinden zweier benachbarter Verteilerbaugruppen 14 mittels eines Konnektors 44 beschrieben, der zum einen eine Strömungsverbindung und zum anderen eine starre mechanische Verbindung zwischen den benachbarten Verteilerbaugruppen 14 herstellt.

In Figur 5 ist eine erste Ausführungsform eines Konnektors 44 separat dargestellt. Der Konnektor 44 ist hier als Doppelkupplung (doppelt männlicher Konnektor) ausgeführt. Im Inneren des Konnektors 44 ist ein durchgehender Strömungskanal 48 gebildet. Die den Strömungskanal 48 umgebende Wandung ist so dick und stabil, dass sie hohen Drücken (4 bar und ggf. mehr) standhalten kann. Innerhalb der Gehäuse 18 der Verteilerbaugruppen 14 ist der Konnektor 44 jeweils durch zwei O-Ringe 50 abgedichtet.

Im montierten Zustand fluchtet ein erstes offenes Ende 54 des Konnektors 44 mit einem der Zuführ- oder Abführanschlüsse 30 der Fluidverteilereinrichtung der Verteilerbaugruppe 14. Der Konnektor 44 ragt aus der Öffnung 32 der zugeordneten Haupt-Seitenwand 20 des Gehäuses 18 heraus und erstreckt sich durch die Öffnung 32 der gegenüberliegenden Haupt-Seitenwand 20 des Gehäuses 18 der benachbarten Verteilerbaugruppe 14. Das zweite offene Ende 56 des Konnektors 44 fluchtet mit dem zugeordneten Zuführ- oder Abführanschluss 30 der Fluidverteilereinrichtung der benachbarten Verteilerbaugruppe 14.

Die Fixierung des Konnektors 44 in den beiden benachbarten Verteilerbaugruppen 14 erfolgt jeweils mithilfe eines universalen Sicherungselements 58, das zur Einführung in einen Montageschacht 60 vorgesehen ist, auf den später noch genauer eingegangen wird. In Figur 6 ist ein Sicherungselement 58 einzeln und in Figur 7 im montierten Zustand in einer Verteilerbaugruppe 14 (ohne Konnektor) dargestellt.

Das Sicherungselement 58 hat im Wesentlichen die Form einer rechteckigen Platte mit einem im Wesentlichen halbkreisförmigen Ausschnitt. Die Randfläche dieses Ausschnitts bildet einen Eingriffsabschnitt 62, der auf eine Aussparung 64 in der Außenkontur des Anschlusselements 42, hier des Konnektors 44, abgestimmt ist.

Auf einer ersten Seite weist das Sicherungselement 58 ein elastisch auslenkbares Rastelement 66 in Form einer Zunge oder eines Hakens auf. Auf der entgegengesetzten zweiten Seite sind zwei längliche Erhebungen 68 gebildet, die auch als Montageschienen bezeichnet werden können. Die Erhebungen 68 sind bezüglich des Eingriffsabschnitts 62 an den beiden benachbarten seitlichen Rändern gebildet und verlaufen weitgehend parallel. Außerdem sind auf der zweiten Seite an dem vom Eingriffsabschnitt 62 abgewandten Ende noch zwei Einkerbungen 70 vorgesehen.

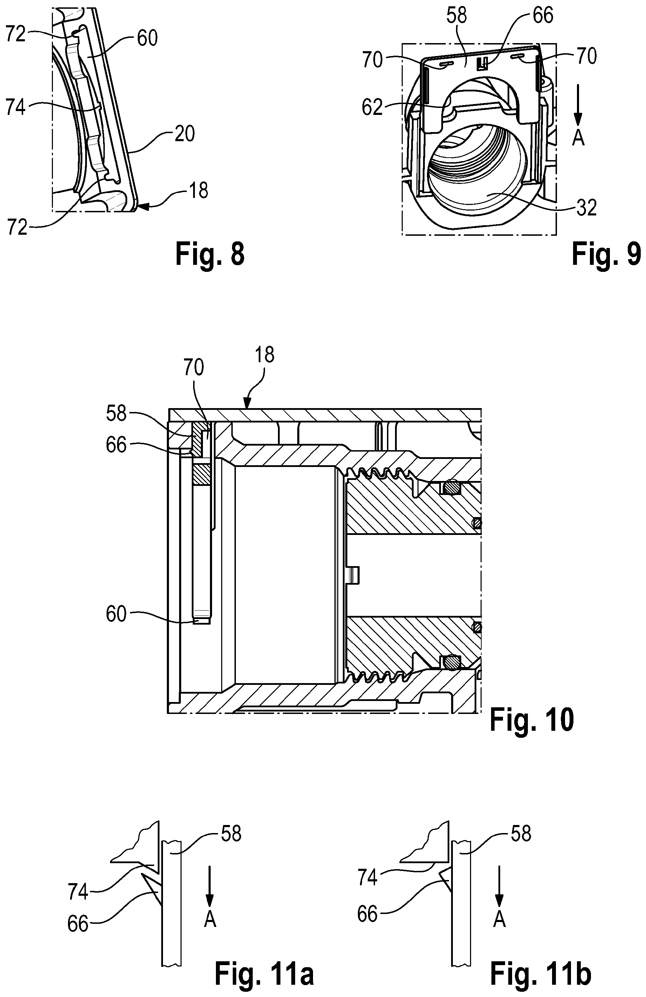

In den Figuren 8 bis 10 ist der Montageschacht 60 genauer zu sehen, in den das Sicherungselement 58 eingeführt werden kann. Der Montageschacht 60 ist im Gehäuse 18 der Verteilerbaugruppe 14 gebildet und frei zugänglich. Der Montageschacht 60 ist so an einem Zuführ- oder Abführanschluss 30 angeordnet, dass er die nach innen ragende Öffnung 32, die dem Zuführ- oder Abführanschluss 30 zugeordnet ist, kreuzt.

Die Form des Montageschachts 60 ist an die Form des Sicherungselements 58 angepasst. Insbesondere weist der Montageschacht 60 einen Hauptkanal auf, der der Plattenform des Sicherungselements 58 entspricht. Außerdem weist der Montageschacht 60 auf einer ersten Seite zwei Vertiefungen 72 auf, die komplementär zu den Erhebungen 68 sind. Auf der entgegengesetzten Seite des Montageschachts 60 ist ein Rastabschnitt 74 in Form eines Ausbruchs mit einer Rastfläche vorgesehen, der auf das Rastelement 66 abgestimmt ist.

Aufgrund der besonderen Gestaltung des Sicherungselements 58 mit den Erhebungen 68 und des Montageschachts 60 mit den Vertiefungen 72, die komplementäre Indexstrukturen bilden, kann das Sicherungselement 58 nur in einer Orientierung in den Montageschacht 60 eingeführt werden, in der die Erhebungen 68 in die Vertiefungen 72 eingreifen.

Um zusätzlich auszuschließen, dass das Sicherheitselement 58 in einer Orientierung eingeführt werden kann, in der der Eingriffsabschnitt 62 nicht mit der Öffnung 32 fluchtet, kann vorgesehen sein, dass der Montageschacht 60 unten - bezogen auf die Einführrichtung A (siehe Figur 9) - in Richtung zur Mitte der Öffnung 32 etwas schmäler wird. Dementsprechend nimmt auch die Breite des Sicherungselements 58 zu dem Ende hin ab, an dem der Eingriffsabschnitt 62 gebildet ist. Dadurch wird verhindert, dass das Sicherungselement 58 versehentlich mit dem breiteren Ende zuerst in den Montageschacht 60 eingeführt wird.

Fertigungstechnisch ist es vorteilhaft, wenn das Sicherungselement 58 nach unten hin - ebenfalls bezogen auf die Einführrichtung A - dünner wird, d. h. die beiden Abschnitte neben dem (hier halbkreisförmigen) Ausschnitt laufen jeweils keilförmig zusammen. Diese Keilform erweist sich auch dahingehend als vorteilhaft, dass sie eine korrekte axiale Positionierung des Anschlusselements 42 unterstützt. Wenn z. B. das Anschlusselement nicht ganz vollständig in die Öffnung 32 eingeführt wurde und deshalb die Aussparung 64 nicht perfekt mit dem Montageschacht 60 fluchtet, kann das Sicherungselement 58 dank seiner Keilform dennoch in die Aussparung 64 eingreifen und zieht beim weiteren Hineinschieben in den Montageschacht 60 das Anschlusselement 42 automatisch in das Gehäuse 18 hinein, bis es die korrekte axiale Position erreicht hat.

In der gewünschten, korrekten Orientierung lässt sich das Sicherungselement 58 so weit in den Montageschacht 60 schieben, bis das beim Einschieben quer zur Einführrichtung A ausgelenkte Rastelement 66 in den Ausbruch zurückschnappen und sich am Rastabschnitt 74 abstützen kann. Diese Position des Sicherungselements 58 wird nachfolgend als Sicherungsposition bezeichnet.

Das Zusammenspiel zwischen dem Rastelement 66 und dem Rastabschnitt 74 kann auch in umgekehrter Weise erfolgen. So kann auf dem Sicherungselement 58 anstelle einer auslenkbaren Zunge oder eines auslenkbaren Hakens eine nicht auslenkbare Erhebung gebildet sein, z. B. in Form einer Halbkugel. In diesem Fall ist dann zumindest derjenige Abschnitt der Haupt-Seitenwand 20, der den Rastabschnitt 74 bereitstellt, elastisch auslenkbar. Beim Einführen des Sicherungselements 58 in den Montageschacht 60 drückt das Rastelement 66 den Abschnitt der Haupt-Seitenwand 20 nach außen, bis dieser in der Sicherungsposition zurückschnappen und sich das Rastelement 66 am Rastabschnitt 74 abstützen kann.

In der Sicherungsposition tritt das Sicherungselement 58 in Wechselwirkung mit dem zuvor in die Öffnung 32 eingesetzten Konnektor 44. Genauer gesagt greift der Eingriffsabschnitt 62 des Sicherungselements 58 in die Aussparung 64 in der Außenkontur des Konnektors 44 ein. Da die Aussparung 64 in axialer Richtung des Konnektors 44 beidseitig begrenzt ist, ist der Konnektor 44 am Gehäuse 18 der Verteilerbaugruppe 14 in einer definierten Position fixiert.

Falls ein späteres Entfernen des Sicherungselements 58 und des Konnektors 44 nicht gewünscht ist, sind die Gestaltungen des Rastelements 66 und des Rastabschnitts 74 so gewählt, dass sich das Rastelement 66 am Rastabschnitt 74 irreversibel verhakt. Dies kann insbesondere durch einen als Hinterschneidung ausgebildeten Rastabschnitt 74 mit einer geneigten Rastfläche und einem darauf abgestimmten Rastelement 66 erreicht werden, wie in der Symbolzeichnung in Figur 11a beispielhaft dargestellt. Das Sicherungselement 58 und der Konnektor 44 sind dann irreversibel fixiert und können ohne Beschädigung nicht vom Gehäuse 18 der Verteilerbaugruppe 14 entfernt werden.

Falls jedoch ein späteres Entfernen des Sicherungselements 58 und des Konnektors 44 erlaubt sein soll, ist ein reversibles Zusammenwirken des Rastelements 66 mit dem Rastabschnitt 74 vorgesehen. Dies kann beispielsweise durch Gestaltungen des Rastelements 66 und des Rastabschnitts 64 erreicht werden, wie sie in der Symbolzeichnung in Figur 11b gezeigt sind. In diesem Fall ist es möglich, das Rastelement 66 beim Herausziehen entgegen der Einführrichtung A wieder so weit in Querrichtung auszulenken, dass es am Rastabschnitt 74 vorbeigeführt werden kann. Die Auslenkung des Rastelements 66 kann mit einem geeigneten Werkzeug erreicht werden, das in eine oder beide Einkerbungen 70 eingreift, so dass das Sicherungselement 58 herausgehebelt werden kann. Die Einkerbungen 70 sind aus diesem Grund in einem Bereich des Sicherungselements 58 gebildet, der aus dem Montageschacht 60 herausragt. Andernfalls kann der Hauptkanal des Montageschachts 60 zumindest abschnittsweise erweitert sein, um den Zugang für das Werkzeug zu ermöglichen.

Alternativ oder zusätzlich kann vorgesehen sein, dass das Sicherungselement 58 eine abnehmende Wandstärke aufweist. Genauer gesagt nimmt die Wandstärke des Sicherungselements 58 - bei korrekter Orientierung relativ zum Montageschacht 60 - in der Einführrichtung A ab, d. h. bei einem senkrechten Einführen von oben nach unten ist das Sicherungselement 58 unten dünner als oben. Eine solche Gestaltung des Sicherungselements 58 verbessert die spritzgusstechnische Umsetzung des Montageschachtes 60 im Gehäuse 18.

Das aus der Öffnung 32 der Verteilerbaugruppe herausragende zweite Ende 56 des Konnektors 44 wird auf die gleiche Weise wie oben beschrieben am Gehäuse 18 der benachbarten Verteilerbaugruppe 14 fixiert. Im Ergebnis sind die beiden Verteilerbaugruppen 14 starr miteinander verbunden.

An jeden der Zuführ- und Abführanschlüsse 30 einer Verteilerbaugruppe 14 kann eine andere Verteilerbaugruppe 14 angeschlossen werden. Die Länge der Konnektoren 44 ist vorzugsweise so bemessen, dass die miteinander verbundenen Verteilerbaugruppen 14 sehr dicht aneinander liegen oder sich berühren. Die zuvor beschriebene Reduzierung der Wandstärke der Sicherungselemente 58 ermöglicht ein Zusammenziehen und Aneinanderpressen bzw. Verspannen der Gehäuse 18 der miteinander verbundenen Verteilerbaugruppen 14.

Die geometrische Gestaltung der Verteilerbaugruppen 14 gibt ein logisches Raster mit definierten Stellen vor, an denen Verteilerbaugruppen 14 für eine Verbindung mit benachbarten Verteilerbaugruppen 14 angeordnet sein können.

Wie bereits erwähnt, können die Zuführ- oder Abführanschlüsse 30 der Verteilerbaugruppen 14 auch dazu genutzt werden, bestimmte Funktionseinheiten anzuschließen. Solche Funktionseinheiten verfügen ebenso wie der zuvor beschriebene Konnektor 44 über ein erstes Ende 54, das in die Öffnung 32 einer Verteilerbaugruppe 32 eingeführt werden kann. Der in diesem ersten Ende 54 ausgebildete Strömungskanal 48 stellt eine Strömungsverbindung mit dem zugehörigen Zuführ- oder Abführanschluss 30 der Verteilerbaugruppe 14 her.

Die Fixierung der Funktionseinheit am Gehäuse der Verteilerbaugruppe 14 erfolgt auf die gleiche Weise wie oben im Zusammenhang mit dem Konnektor 44 beschrieben. Das heißt, das erste Ende 54 der Funktionseinheit ist mit einer Aussparung 64 versehen, in die der Eingriffsabschnitt 62 des Sicherheitselements 58 eingreift, wenn dieses in die Sicherungsposition überführt wird.

Beispiele für Funktionseinheiten, die am Gehäuse 18 der Verteilerbaugruppe 14 fixiert werden können, sind Entlüftungseinrichtungen 46, Probeentnahmeeinrichtungen, Sensoren (insbesondere zur Messung von Druck, Fluss, Viskosität, pH-Wert oder elektrische Leitfähigkeit) und spektroskopische Messeinrichtungen (UV-VIS, NIR, Raman etc.).

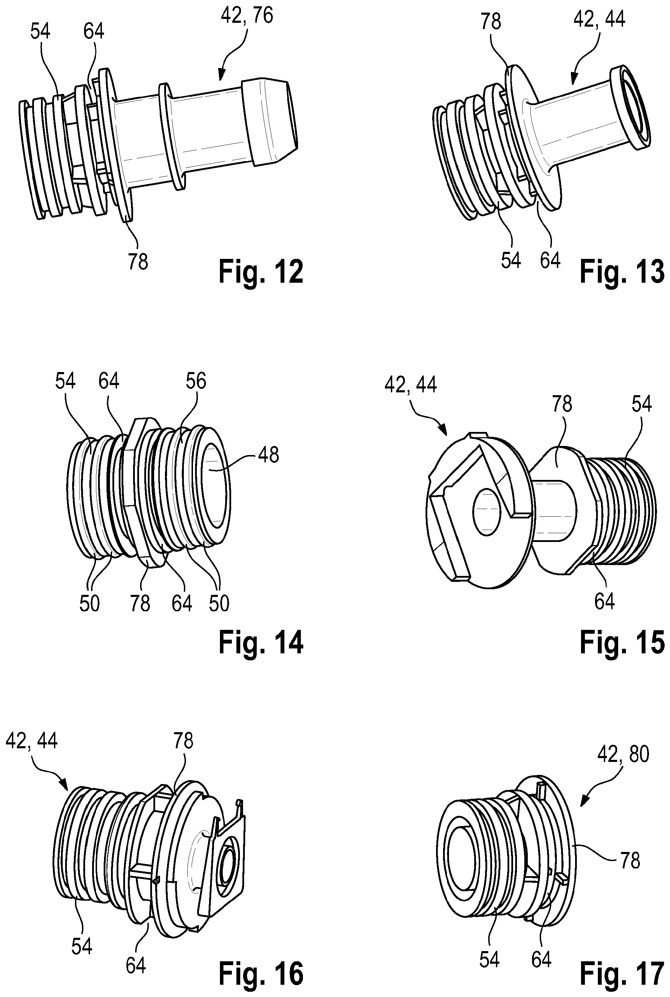

Eine Funktionseinheit kann auch über eine flexible Schlauchleitung an einen Zuführ- oder Abführanschluss 30 einer Verteilerbaugruppe 14 angeschlossen werden, beispielsweise mithilfe einer Schlauchtülle 76, wie sie in Figur 12 gezeigt ist.

In den Figuren 13 bis 16 sind weitere Beispiele für Typen von Konnektoren 44 gezeigt, die zumindest mit einem Ende 54 wie oben beschrieben in einem Gehäuse 18 einer Verteilerbaugruppe 14 fixiert werden können.

Gemäß der Erfindung ist eine Verdrehsicherung, und insbesondere mechanische Codierung, vorgesehen, die sicherstellt, dass das Anschlusselement 42 nur in einer einzigen Orientierung oder nur in einer begrenzten Anzahl definierter Orientierungen in die Öffnung 32 einer Verteilerbaugruppe 14 eingesetzt und fixiert werden kann.

Gemäß einer ersten Alternative ist zu diesem Zweck vorgesehen, dass der Rand der Öffnung 32 nicht rund ist und der Konnektor 44, oder allgemein das Anschlusselement 42, einen Flansch 78 mit einem dazu passenden Außenumfang aufweist. Beispielsweise kann der Flansch 78, wie in den Figuren 14 bis 16 gezeigt, die Form eines Polygons haben, wobei die Ecken abgerundet sein können. Damit ein solches Anschlusselement 42 an einem Zuführ- oder Abführanschluss 30 einer Verteilerbaugruppe 14 fixiert werden kann, muss die zugehörige Öffnung 32 eine dem Polygon entsprechende Form aufweisen. Beispielsweise hat die in Figur 7 gezeigte Öffnung 32 eine quadratische Grundform, auf die der Flansch 78 des in Figur 15 gezeigten Konnektors 44 abgestimmt ist.

Abhängig von der konkreten Form der Öffnung 32 und des Flanschs 78 kann das Anschlusselement 42 nur in einer einzigen oder in mehreren definierten (nicht beliebigen) Orientierungen eingesetzt und fixiert werden.

Gemäß einer zweiten Alternative ist es grundsätzlich auch möglich, die Aussparung 64 eines Anschlusselements 42 so zu formen, dass das Sicherungselement 58 nur dann in die Sicherungsposition überführt werden kann, wenn der das Anschlusselement 42 eine ganz bestimmte oder eine von einer begrenzten Anzahl definierter Orientierungen einnimmt. Dies kann z. B. durch eine ovale Grundform des Bodens der Aussparung 64 erreicht werden, die eine erste und eine um 180° um die Längsachse gedrehte Orientierung erlaubt. Darüber hinaus sind viele weitere aufeinander abgestimmte Gestaltungen der Aussparung 64 des Anschlusselements 42 und des Eingriffsabschnitts 62 des Sicherungselements 58 möglich, die nur eine oder nur eine begrenzte Anzahl von definierten Orientierungen des Anschlusselements 42 zulassen. Beispielsweise sind bei einer quadratischen Grundform des Bodens der Aussparung 64 und bei entsprechend quadratisch geformtem Eingriffsabschnitt 62 des Sicherungselements 58 vier Orientierungen des Anschlusselements 42 mit einem Drehwinkelabstand von 90° möglich.

Solche Codierungen bzw. Verdrehsicherungen sind insbesondere dann sinnvoll, wenn eine Funktionseinheit, wie etwa eine Entlüftungseinrichtung 46, im Betriebszustand eine bestimmte Orientierung haben soll.

Nicht genutzte Zuführ- oder Abführanschlüsse 30 können mit einem Blindstopfen 80 verschlossen werden, wie er in Figur 17 gezeigt ist. Wie jedes andere Anschlusselement 42 ist auch der Blindstopfen 80 bezüglich des Gehäuses 18, in dem er angeordnet ist, durch zwei O-Ringe 50 abgedichtet und mit einem Sicherungselement 58 fixiert. Grundsätzlich ist es auch möglich, eine Funktionseinheit in einen Blindstopfen 80 zu integrieren.

Als Anschlusselement 42 kann auch ein Septum vorgesehen sein, das den entsprechenden, ansonsten nicht genutzten Zuführ- oder Abführanschluss 30 verschließt. Dadurch besteht die Möglichkeit, an dieser Stelle einen Zugang für eine Kanüle zu schaffen, um Flüssigkeit z. B. mit einer Spritze entnehmen oder zuführen zu können. Das Septum kann auch in einen Blindstopfen 80 integriert sein.

Unabhängig von der endgültigen Konfiguration der mithilfe der Verteilerbaugruppen 14 aufgebauten Prozess-Vorrichtungsanordnung 10 sind alle Verteilerbaugruppen 14 und zumindest alle direkt an den Verteilerbaugruppen 14 angebrachten Separationseinheiten 12 und sonstigen Komponenten (Funktionseinheiten, Schlauchleitungen etc.) als Einweg-Komponenten ausgeführt, d. h. sie sind für den einmaligen Gebrauch bestimmt und dementsprechend aus geeigneten Kunststoffmaterialien gebildet. Soweit die einzelnen Komponenten dies zulassen, kann die gesamte oder zumindest ein Großteil der Prozess-Vorrichtungsanordnung 10 vor ihrer Inbetriebnahme vorsterilisiert werden, sodass sie sofort einsatzbereit ist.

Die Verteilerbaugruppen 14, wie sie oben anhand mehrerer Beispiele beschrieben wurden, können in der biopharmazeutischen Industrie, insbesondere zur Durchführung eines oder mehrerer Prozessschritte in einem Downstream-Prozess verwendet werden. Die Erfindung ist aber nicht auf eine solche Anwendung eingeschränkt. Unter anderem ist eine Verwendung in Bind/Elute- und in Flow-through-Prozessen im Rahmen von Membran- und Chromatographie-Anwendungen möglich.

### Bezugszeichenliste

- 10: Prozess-Vorrichtungsanordnung
- 12: Separationseinheit
- 14: Verteilerbaugruppe
- 16: Untereinheit
- 18: Gehäuse
- 20: Haupt-Seitenwand
- 22: Neben-Seitenwand
- 24: Deckel
- 26: Boden- oder Deckelabschnitt
- 28: Arbeitsanschluss
- 30: Zuführ- oder Abführanschluss
- 32: Öffnung
- 34: Fluideinlass oder -auslass
- 36: Montagemittel
- 38: Stützelement
- 40: Kugel
- 42: Anschlusselement
- 44: Konnektor
- 46: Entlüftungseinrichtung
- 48: Strömungskanal
- 50: O-Ring
- 52: Spindel
- 54: erstes Ende des Anschlusselements
- 56: zweites Ende des Anschlusselements
- 58: Sicherungselement
- 60: Montageschacht
- 62: Eingriffsabschnitt
- 64: Aussparung
- 66: Rastelement
- 68: Erhebung
- 70: Einkerbung
- 72: Vertiefung
- 74: Rastabschnitt
- 76: Schlauchtülle
- 78: Flansch
- 80: Blindstopfen

## Patentansprüche

1. Verteilerbaugruppe (14) für eine Separationseinheit (12) einer modularen Prozess-Vorrichtungsanordnung (10), mit
- einem Gehäuse (18),
- einer sich im Inneren des Gehäuses (18) befindlichen Fluidverteilereinrichtung mit mehreren Fluidanschlüssen (28, 30), die ein durch eine offene Gehäuseseite zugänglichen, mittigen Arbeitsanschluss (28) und mehrere seitliche Zuführ- oder Abführanschlüsse (30) umfassen, wobei den Zuführ- oder Abführanschlüssen (30) jeweils eine Öffnung (32) am Gehäuse (18) zugeordnet ist, wobei die Fluidverteilereinrichtung so eingerichtet ist, Strömungsverbindungen zwischen den Fluidanschlüssen (28, 30) selektiv herzustellen und zu sperren,
- einem Anschlusselement (42), welches an einen der Zuführ- oder Abführanschlüsse (30) über die diesem Zuführ- oder Abführanschluss (30) zugeordnete Öffnung (32) anbringbar ist, und
- einem Sicherungselement (58),
wobei die Verteilerbaugruppe (14) an dem Zuführ- oder Abführanschluss (30), an dem das Anschlusselement (42) anbringbar ist, einen zugeordneten Montageschacht (60) aufweist,
wobei der Montageschacht (60) so an die Form des Sicherungselements (58) angepasst ist, dass das Sicherungselement (58) bis zu einer definierten Sicherungsposition in den Montageschacht (60) einführbar ist, in der das Sicherungselement (58) am Anschlusselement (42) angreift und dieses fixiert,
**dadurch gekennzeichnet, dass** das Anschlusselement (42) eine Verdrehsicherung aufweist, die sicherstellt, dass das Anschlusselement (42) nur in einer einzigen Orientierung oder nur in einer begrenzten Anzahl definierter Orientierungen in die dem Zuführ- oder Abführanschluss (30), an dem das Anschlusselement (42) anbringbar ist, zugeordnete Öffnung (32) der Verteilerbaugruppe (14) einsetzbar und mittels des Siche-
rungselements (58) fixierbar ist.

2. Verteilerbaugruppe (14) nach Anspruch 1, **dadurch gekennzeichnet, dass** das Anschlusselement (42) ein Konnektor (44) mit einem durch eine Wandung begrenzten Strömungskanal (48) ist, der in zwei entgegengesetzte offene Enden (54, 56) mündet, wobei im fixierten Zustand des Konnektors (44) ein offenes Ende (54, 56) des Konnektors (44) mit dem Fluidanschluss der Verteilerbaugruppe (14) fluchtet.

3. Verteilerbaugruppe (14) nach Anspruch 1, **dadurch gekennzeichnet, dass** das Anschlusselement (42) eine Funktionseinheit ist, die im fixierten Zustand in Strömungsverbindung mit dem Zuführ- oder Abführanschluss (30) steht, an dem das Anschlusselement (42) anbringbar ist.

4. Verteilerbaugruppe (14) nach Anspruch 3, **dadurch gekennzeichnet, dass** die Funktionseinheit in einen Blindstopfen (80) integriert ist.

5. Verteilerbaugruppe (14) nach Anspruch 3 oder 4, **dadurch gekennzeichnet, dass** das Anschlusselement (42) ein Septum aufweist.

6. Verteilerbaugruppe (14) nach einem der vorhergehenden Ansprüche, **dadurch gekennzeichnet, dass** im fixierten Zustand des Anschlusselements (42) das Sicherungselement (58) mit einem Eingriffsabschnitt (62) in eine Aussparung (64) des Anschlusselements (42) eingreift.

7. Verteilerbaugruppe (14) nach Anspruch 6, **dadurch gekennzeichnet, dass** der Eingriffsabschnitt (62) und die Aussparung (64) so aufeinander abgestimmt sind, dass das Anschlusselement (42) nur in einer einzigen Orientierung oder nur in einer begrenzten Anzahl definierter Orientierungen durch das Sicherungselement (58) fixierbar ist.

8. Verteilerbaugruppe (14) nach einem der vorhergehenden Ansprüche, **dadurch gekennzeichnet, dass** ein Flansch (78) des Anschlusselements (42) und die dem Zuführ- oder Abführanschluss (30), an dem das Anschlusselement (42) anbringbar ist, zugeordnete Öffnung (32) so aufeinander abgestimmt sind, dass das Anschlusselement (42) nur in einer einzigen Orientierung oder nur in einer begrenzten Anzahl definierter Orientierungen in diese Öffnung (32) einsetzbar ist.

9. Verteilerbaugruppe (14) nach einem der vorhergehenden Ansprüche, **dadurch gekennzeichnet, dass** das Sicherungselement (58) ein Rastelement (66) oder einen Rastabschnitt (74) aufweist, der in der Sicherungsposition des Sicherungselements (58) mit einem darauf abgestimmten Rastabschnitt (74) bzw. Rastelement (66) im oder am Montageschacht (60) der Verteilerbaugruppe (14) zusammenwirkt.

10. Verteilerbaugruppe (14) nach Anspruch 9, **dadurch gekennzeichnet, dass** das Rastelement (66) in der Sicherungsposition des Sicherungselements (58) nicht mehr vom Rastabschnitt (74) lösbar ist.

11. Verteilerbaugruppe (14) nach Anspruch 9, **dadurch gekennzeichnet, dass** das Rastelement (66) und der Rastabschnitt (74) so aufeinander abgestimmt sind, dass das Sicherungselement (58) durch Auslenken des Rastelements (66) oder des Rastabschnitts (74) aus der Sicherungsposition entfernbar ist, ggf. mithilfe eines Werkzeugs.

12. Verteilerbaugruppe (14) nach einem der Ansprüche 9 bis 11, **dadurch gekennzeichnet, dass** das Sicherungselement (58) und die Verteilerbaugruppe (14) komplementäre Indexstrukturen aufweisen, die so miteinander zusammenwirken, dass ein Einführen des Sicherungselements (58) in einer falschen Orientierung in den Montageschacht (60) unterbunden ist.

13. Verteilerbaugruppe (14) nach Anspruch 12, **dadurch gekennzeichnet, dass** die Indexstrukturen wenigstens eine Erhebung (68) und wenigstens eine an die Erhebung (68) angepasste Vertiefung (72) aufweisen.

14. Verteilerbaugruppe (14) nach einem der vorhergehenden Ansprüche, **dadurch gekennzeichnet, dass** das Anschlusselement (42) durch wenigstens zwei Dichtringe (50) gegenüber dem Zuführ- oder Abführanschluss (30) abgedichtet ist, an dem das Anschlusselement (42) anbringbar ist.

## Claims

1. A distributor assembly (14) for a separation unit (12) of a modular process device arrangement (10), comprising
- a housing (18).
- a fluid distributor device having a plurality of fluid ports (28, 30) located in the interior of the housing (18), said fluid ports comprising a central working port (28) accessible through an open housing side and a plurality of lateral feed or discharge ports (30), wherein in each case an opening (32) on the housing (18) is associated with the feed or discharge ports (30), wherein the fluid distributor device is adapted to selectively establish and block fluid communications between the fluid ports (28, 30)
- a connecting element (42), which can be attached to one of the feed or discharge ports (30) via the opening (32) associated with this feed or discharge port (30), and
- a retaining element (58),
wherein the distributor assembly (14) comprises an associated mounting slot (60) at the feed or discharge port (30) to which the connecting element (42) can be attached,
wherein the mounting slot (60) is adapted to a shape of the retaining element (58) such that the retaining element (58) is insertable into the mounting slot (60) up to a defined retaining position, in which the retaining element (58) engages the connecting element (42) and fixes it in place,
**characterized in that** the connecting element (42) comprises a rotation prevention means, which ensures that the connecting element (42) can be inserted into the opening (32) associated with the distributor assembly (14) feed or discharge port (30) to which the connecting element (42) can be attached only in a single orientation or only in a limited number of defined orientations and can be fixed in place by means of the retaining element (58).

2. The distributor assembly (14) according to claim 1, **characterized in that** the connecting element (42) is a connector (44) having a flow duct (48) which is defined by a wall and opens into two opposite ends (54, 56), wherein in a fixed state of the connector (44) one open end (54, 56) of the connector (44) is aligned with the fluid port of the distributor assembly (14).

3. The distributor assembly (14) according to claim 1, **characterized in that** the connecting element (42) is a functional unit, which in a fixed state is in fluid communication with the feed or discharge port (30) to which the connecting element (42) can be attached.

4. The distributor assembly (14) according to claim 3, **characterized in that** the functional unit is integrated in a blind plug (80).

5. The distributor assembly (14) according to claim 3 or 4, **characterized in that** the connecting element (42) includes a septum.

6. The distributor assembly (14) according to any of the foregoing claims, **characterized in that** in the fixed state of the connecting element (42) the retaining element (58) engages with an engagement section (62) in a recess (64) of the connecting element (42).

7. The distributor assembly (14) according to claim **6, characterized in that** the engagement section (62) and the recess (64) are matched to each other such that the connecting element (42) can be fixed in place by the retaining element (58) only in a single orientation or in a limited number of defined orientations.

8. The distributor assembly (14) according to any of the foregoing claims, **characterized in that** a flange (78) of the connecting element (42) and the opening (32) associated with the feed or discharge port (30) to which the connecting element (42) can be attached are matched to each other such that the connecting element (42) is insertable into the opening (32) only in a single orientation or in a limited number of defined orientations.

9. The distributor assembly (14) according to any of the foregoing claims, **characterized in that** the retaining element (58) includes a detent element (66) or a detent section (74), which, in the retaining position of the retaining element (58), cooperates with a matching detent section (74) or detent element (66) in or on the mounting slot (60) of the distributor assembly (14).

10. The distributor assembly (14) according to claim 9, **characterized in that** the detent element (66) is no longer detachable from the detent section (74) when the retaining element (58) is in the retaining position.

11. The distributor assembly (14) according to claim 9, **characterized in that** the detent element (66) and the detent section (74) are matched to each other such that the retaining element (58) is removable from the retaining position by deflecting the detent element (66) or the detent section (74), if required with the aid of a tool.

12. The distributor assembly (14) according to any of claims 9 to 11, **characterized in that** the retaining element (58) and the distributor assembly (14) have complementary index structures that cooperate with each other such that insertion of the retaining element (58) into the mounting slot (60) in an incorrect orientation is prevented.

13. The distributor assembly (14) according to claim 12, **characterized in that** the index structures include at least one raised portion (68) and at least one depression (72) adapted to the raised portion (68).

14. The distributor assembly (14) according to any of the foregoing claims, **characterized in that** the connecting element (42) is sealed from the feed or discharge port (30) to which the connecting element (42) can be attached by at least two sealing rings (50).

## Revendications

1. Ensemble distributeur (14) pour une unité de séparation (12) d'un agencement de dispositif de traitement modulaire (10), avec
- un boîtier (18),
- un système de distribution de fluide se trouvant à l'intérieur du boîtier (18) avec plusieurs raccords de fluide (28, 30), qui comprennent un raccord de travail (28) central accessible par une face de boîtier ouverte, et plusieurs raccords d'amenée ou d'évacuation (30) latéraux,
dans lequel respectivement une ouverture (32) sur le boîtier (18) est associée aux raccords d'amenée ou d'évacuation (30), dans lequel le système de distribution de fluide est conçu pour sélectivement établir et bloquer des liaisons fluidiques entre les raccords de fluide (28, 30),
- un élément de raccordement (42), lequel peut être monté sur un des raccords d'amenée ou d'évacuation (30) par l'intermédiaire de l'ouverture (32) associée à ce raccord d'amenée ou d'évacuation (30), et
- un élément de blocage (58),
dans lequel l'ensemble distributeur (14) présente sur le raccord d'amenée ou d'évacuation (30), sur lequel l'élément de raccordement (42) peut être monté, un puits de montage (60) associé,
dans lequel le puits de montage (60) est adapté à la forme de l'élément de blocage (58), de sorte que l'élément de blocage (58) peut être introduit dans le puits de montage (60) jusqu'à une position de blocage définie dans laquelle l'élément de blocage (58) agit sur l'élément de raccordement (42) et fixe celui-ci,
**caractérisé en ce que** l'élément de raccordement (42) présente un blocage en rotation, qui garantit que l'élément de raccordement (42) ne puisse être inséré dans l'ouverture (32) de l'ensemble distributeur (14) associée au raccord d'amenée ou d'évacuation (30), sur lequel l'élément de raccordement (42) peut être monté, et ne puisse être fixé au moyen de l'élément de blocage (58) que dans une seule orientation ou que dans un nombre limité d'orientations définies.

2. Ensemble distributeur (14) selon la revendication 1, **caractérisé en ce que** l'élément de raccordement (42) est un connecteur (44) avec un canal d'écoulement (48) délimité par une paroi, qui débouche dans deux extrémités ouvertes (54, 56) opposées, dans lequel dans l'état fixé du connecteur (44) une extrémité ouverte (54, 56) du connecteur (44) est en affleurement avec le raccord de fluide de l'ensemble distributeur (14).

3. Ensemble distributeur (14) selon la revendication 1, **caractérisé en ce que** l'élément de raccordement (42) est une unité fonctionnelle, qui dans l'état fixé est en liaison fluidique avec le raccord d'amenée ou d'évacuation (30), sur lequel l'élément de raccordement (42)peut être monté.

4. Ensemble distributeur (14) selon la revendication 3, **caractérisé en ce que** l'unité fonctionnelle est intégrée dans un bouchon étanche (80).

5. Ensemble distributeur (14) selon la revendication 3 ou 4, **caractérisé en ce que** l'élément de raccordement (42) présente un septum.

6. Ensemble distributeur (14) selon l'une quelconque des revendications précédentes, **caractérisé en ce que** dans l'état fixé de l'élément de raccordement (42) l'élément de blocage (58) s'insère avec une section d'insertion (62) dans un évidement (64) de l'élément de raccordement (42).

7. Ensemble distributeur (14) selon la revendication 6, **caractérisé en ce que** la section d'insertion (62) et l'évidement (64) sont adaptés l'un à l'autre de sorte que l'élément de raccordement (42) ne peut être fixé par l'élément de blocage (58) que dans une seule orientation ou que dans un nombre limité d'orientations définies.

8. Ensemble distributeur (14) selon l'une quelconque des revendications précédentes, **caractérisé en ce qu'**une bride (78) de l'élément de raccordement (42) et l'ouverture (32) associée au raccord d'amenée ou d'évacuation (30), sur lequel l'élément de raccordement (42) peut être monté, sont adaptées l'une à l'autre de sorte que l'élément de raccordement (42) ne peut être inséré dans cette ouverture (32) que dans une seule orientation ou que dans un nombre limité d'orientations définies.

9. Ensemble distributeur (14) selon l'une quelconque des revendications précédentes, **caractérisé en ce que** l'élément de blocage (58) présente un élément d'encliquetage (66) ou une section d'encliquetage (74), qui dans la position de blocage de l'élément de blocage (58) coopère avec une section d'encliquetage (74) ou un élément d'encliquetage (66) adapté(e) à celui-ci dans ou sur le puits de montage (60) de l'ensemble distributeur (14).

10. Ensemble distributeur (14) selon la revendication 9, **caractérisé en ce que** l'élément d'encliquetage (66) dans la position de blocage de l'élément de blocage (58) ne peut plus être détaché de la section d'encliquetage (74).

11. Ensemble distributeur (14) selon la revendication 9, **caractérisé en ce que** l'élément d'encliquetage (66) et la section d'encliquetage (74) sont adaptés l'un à l'autre de sorte que l'élément de blocage (58) peut être retiré de la position de blocage par déviation de l'élément d'encliquetage (66) ou de la section d'encliquetage (74) éventuellement à l'aide d'un outil.

12. Ensemble distributeur (14) selon l'une quelconque des revendications 9 à 11, **caractérisé en ce que** l'élément de blocage (58) et l'ensemble distributeur (14) présentent des structures de repérage complémentaires, qui coopèrent ensemble de sorte qu'une introduction de l'élément de blocage (58) dans une mauvaise orientation dans le puits de montage (60) est empêchée.

13. Ensemble distributeur (14) selon la revendication 12, **caractérisé en ce que** les structures de repérage présentent au moins une bosse (68) et au moins un creux (72) adapté à la bosse (68) .

14. Ensemble distributeur (14) selon l'une quelconque des revendications précédentes, **caractérisé en ce que** l'élément de raccordement (42) est étanchéifié par au moins deux bagues d'étanchéité (50) par rapport au raccord d'amenée ou d'évacuation (30), sur lequel l'élément de raccordement (42) peut être monté.
